# EUROPEAN PATENT APPLICATION

(11) **EP 4 645 539 A1**
(43) Date of publication of application: **05.11.2025**
(21) Application number: 24205791.7
(22) Date of filing: 10.10.2024
(51) Int. Cl.: H01M 50/15, H01M 50/176, H01M 50/188

(54) **TOP COVER ASSEMBLY AND BATTERY**

(30) Priority: 30.04.2024 CN 202420949332 U; 13.06.2024 WO PCT/CN2024/099004
(71) Applicant: Huizhou EVE Power Co., Ltd, Tonghu Town, Zhongkai High-tech District Huizhou, Guangdong 516039 (CN); Eve Power Co., Ltd., Jingmen, Hubei 448000 (CN)
(72) Inventor: WU, Xueyin, Huizhou, Guangdong (CN); SHU, Kuanjin, Huizhou, Guangdong (CN); DUAN, Dong, Huizhou, Guangdong (CN); LIU, Ziwen, Huizhou, Guangdong 516039 (CN); HE, Wei, Huizhou, Guangdong (CN)
(74) Representative: Murgitroyd & Company

(57) **Abstract**

The present disclosure provides a top cover assembly (100) and a battery (10). The top cover assembly (100) includes a cover plate (110) and a pole (120). The cover plate (110) includes a first surface (111) and a second surface (112). Afirst through hole (113) is provided on the cover plate (110) and penetrates from the first surface (111) to the second surface (112). The pole (120) passes through the first through hole (113). The pole (120) includes a first connecting part (121) inserted in the first through hole (113). An orthographic projection of the first connecting part (121) in a direction from the second surface (112) toward the first surface (111) forms a first profile. The first profile has a first maximum length L 1 in the first direction (X) and a first maximum width L2 in a second direction (Y), where 2 ≤ L1/L2 ≤ 3.

## Description

### TECHNICAL FIELD

The present disclosure relates to the technical field of batteries, and in particular, to a top cover assembly and a battery.

### BACKGROUND

A battery generally includes a battery cell, a casing, and a top cover assembly. The top cover assembly is sealed on the casing and forms a protection housing with the casing, and the battery cell is contained in the protection housing. The top cover assembly is usually inserted with positive and negative conductive poles to respectively lead positive and negative electrodes of the battery cell to the outside of the protection housing. In related arts, the pole usually adopts a cylindrical structure to simplify a production and installation process of the pole. However, the cylindrical structure may lead to poor torsion resistance characteristic of the pole, thereby affecting overall mechanical properties of the top cover assembly.

### SUMMARY

Embodiments of the present disclosure provide a top cover assembly and a battery. The top cover assembly and the battery can improve the technical problem of poor overall mechanical properties of the top cover assembly.

In a first aspect, embodiments of the present disclosure provide a top cover assembly. The top cover assembly includes a cover plate and a pole. The cover plate includes a first surface and a second surface opposite to each other, a first through hole is opened on the cover plate, and the first through hole penetrates from the first surface to the second surface. The pole passes through the first through hole and is connected to and insulated from the cover plate, the pole includes a first connecting part inserted through the first through hole, an orthographic projection of the first connecting part in a direction from the second surface to the first surface forms a first profile, the first profile extends along a first direction, the first profile has a first maximum length in the first direction, the first maximum length is L1, the first profile has a first maximum width in a second direction, the first maximum width is L2, a ratio of the first maximum length to the first maximum width satisfies a relationship of 2 ≤ L1/L2 ≤ 3, and the first direction is perpendicular to the second direction.

In a second aspect, embodiments of the present disclosure provide a battery. The battery includes a casing, the top cover assembly as described in any of the above, and a battery cell. The casing is provided with an accommodation cavity. The cover plate of the top cover assembly is connected to the casing. The battery cell is disposed in the accommodation cavity, and the battery cell is electrically connected to the pole of the top cover assembly.

Beneficial effects of the embodiments of the present disclosure:

The top cover assembly provided in the present disclosure includes the cover plate and the pole. The cover plate includes the first surface and the second surface opposite to each other. The cover plate is provided with the first through hole. The first through hole penetrates from the first surface to the second surface. The pole passes through the first through hole and is connected to and insulated from the cover plate. The pole includes the first connecting part inserted in the first through hole. The orthographic projection of the first connecting part in the direction from the second surface toward the first surface forms the first profile, and the first profile extends along the first direction. The first profile has the first maximum length in the first direction, and the first maximum length is L1. The first profile has the first maximum width in the second direction, and the first maximum width is L2. The first direction is perpendicular to the second direction. In the present disclosure, the ratio of the first maximum length to the first maximum width is designed to 2 ≤ L1/L2 ≤ 3, so that a reduction of the tensile resistance characteristic of the pole due to an over large ratio can be avoided in the meanwhile of making the pole have better torsion resistance characteristic, thereby improving the overall mechanical properties of the top cover assembly.

The battery provided in the present disclosure adopts the above top cover assembly, and the cover plate of the top cover assembly is connected to the casing. The pole of the top cover assembly is electrically connected to the battery cell. In the top cover assembly, the ratio of the first maximum length to the first maximum width of the first connection part of the pole is designed to 2 ≤ L1/L2 ≤ 3, so that a reduction of the tensile resistance characteristic of the pole 120 due to an over large ratio can be avoided in the meanwhile of making the pole 120 have better torsion resistance characteristic, thereby improving the overall mechanical properties of the top cover assembly, and then improving the stability of the battery during operation.

### BRIEF DESCRIPTION OF THE DRAWINGS

In order to more clearly illustrate technical solutions in the embodiments of the present disclosure, the drawings needed to be used in the description of the embodiments will be briefly introduced below. Obviously, the drawings in the following description are only some embodiments of the present disclosure. For those skilled in the art, other drawings may also be obtained based on these drawings without exerting creative efforts.
FIG. 1 is a schematic three-dimensional structural diagram of a top cover assembly provided by the present disclosure;
FIG. 2 is an assembly schematic diagram of a top cover assembly provided by the present disclosure;
FIG. 3 is a schematic cross-sectional structural diagram of a top cover assembly provided by the present disclosure;
FIG. 4 is an enlarged structural schematic diagram of area A in FIG. 3 provided by the present disclosure;
FIG. 5 is a schematic top structural view of a pole provided by the present disclosure;
FIG. 6 is a schematic three-dimensional structural diagram of a second insulating component provided by the present disclosure;
FIG. 7 is a schematic structural diagram of a battery provided by the present disclosure.

### Explanation of reference symbols:

10, battery; 100, top cover assembly; 110, cover plate; 111, first surface; 112, second surface; 113, first through hole; 114, installation groove; 115, limiting groove; 120, pole; 121, first connecting part; 122, second connecting part; 130, first insulating component; 131, second through hole; 132, first opening; 133, second opening; 134, inclined surface; 135, limiting part; 140, second insulating component; 141, third through hole; 142, recess; 143, notch; 150, connecting terminal; 160, sealing component; 170, connecting component; 171, fourth through hole; X, first direction; Y, second direction; 200, casing; 210, accommodation cavity; 300, battery cell.

### DETAILED DESCRIPTION

The technical solutions in the embodiments of the present disclosure will be clearly and completely described below with reference to the accompanying drawings in the embodiments of the present disclosure. Obviously, the described embodiments are only some of the embodiments of the present disclosure, rather than all of the embodiments. Based on the embodiments in the present disclosure, all other embodiments obtained by those skilled in the art without making creative efforts fall within the scope of protection of the present disclosure.

In the description of the present disclosure, unless expressly specified and limited otherwise, the terms "link", "connect", "fix" shall be understood broadly. For example, the connection may be a fixed connection, a detachable connection, or an integrated connection. The connection may be a mechanical connection, may also be an electrical connection. The connection may be may be a direct connection, may also be an indirect connection through an intermediate medium. The connection may be a connection within two components or an interaction between the two components. For persons generally skilled in the art, the specific meaning of the above terms in the present disclosure may be understood according to specific situations.

In the present disclosure, unless otherwise expressly specified and limited, a first feature "above" or "below" a second feature may include a direct contact between the first and second features, or may include a contact between the first and second features not directly but through another feature between them. Moreover, the first feature "on", "above", and "over" the second feature includes the first feature directly above and diagonally above the second feature, and a horizontal height of the first feature is greater than a horizontal height of the second feature. The first feature "under" and "below" the second feature includes the first feature directly below and diagonally below the second feature, and the horizontal height of the first feature is less than the horizontal height of the second feature.

In the description of the embodiments, the terms "up", "down", "left", "right", "front", "rear", etc. are based on orientations or position relationships illustrated in the attached drawings for the purpose of facilitating description and simplifying operation, and are not intended to indicate or imply that the device or element referred to must have a particular orientation, construction and operation in a particular orientation. Therefore, it cannot be construed as a limitation on the present disclosure. In addition, the terms "first" and "second" are used to delineate and have no special meaning.

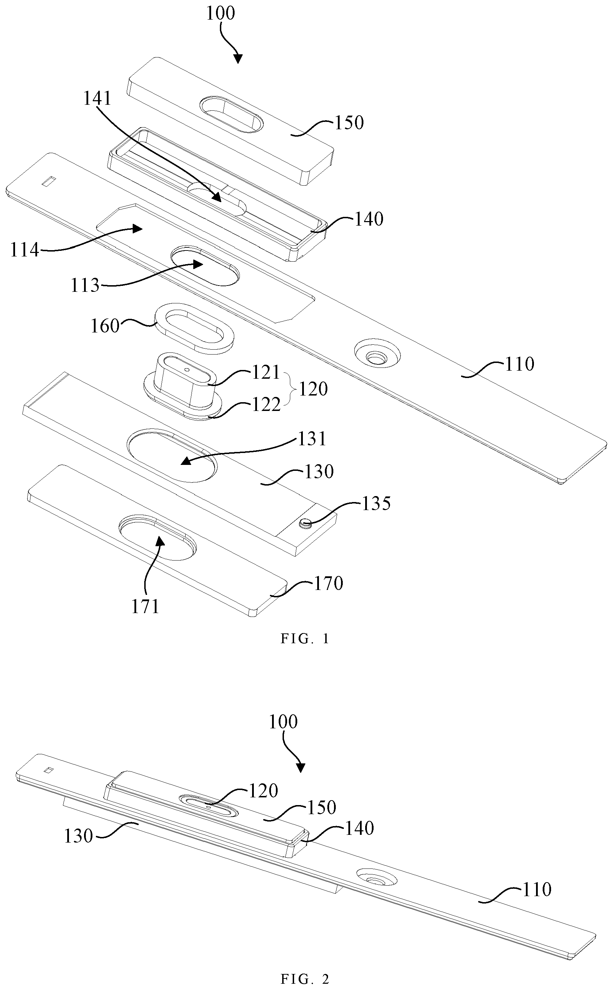

Embodiments of the present disclosure provide a top cover assembly. As illustrated in FIG. 1 to FIG. 3, the top cover assembly 100 includes a cover plate 110. The cover plate 110 includes a first surface 111 and a second surface 112 opposite to each other. A first through hole 113 is opened on the cover plate 110, and the first through hole 113 penetrates from the first surface 111 to the second surface 112. That is, the first through hole 113 penetrates the cover plate 110 along a thickness direction of the cover plate 110, so that when the cover plate 110 is assembled in the battery 10, a battery cell 300 located inside the battery 10 can be electrically connected to an external circuit through the cover plate 110.

The top cover assembly 100 includes a pole 120. The pole 120 passes through the first through hole 113 and is connected to and insulated from the cover plate 110. The pole 120 is configured to electrically connect the battery cell 300 in the battery 10 to realize a connection between the battery cell 300 and the external circuit. The pole 120 includes a first connecting part 121 inserted through the first through hole 113. An orthographic projection of the first connecting part 121 in a direction from the second surface 112 toward the first surface 111 forms a first profile. That is, the first connecting part 121 is a portion of the pole 120 penetrating the first through hole 113 of the cover plate 110, and the first connecting part 121 and a sidewall of the first through hole 113 are insulated from each other to realize the insulation connection between the pole 120 and the cover plate 110. The first profile refers to an area formed by the orthographic projection of the first connecting part 121 in the thickness direction of the cover plate 110.

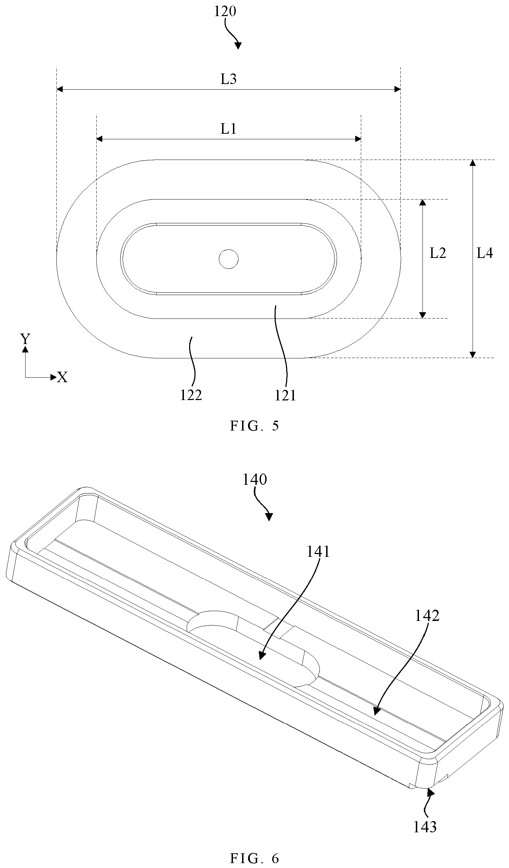

As illustrated in FIG. 5, the first profile extends along a first direction X, the first profile has a first maximum length in the first direction X, the first maximum length is L1. The first profile has a first maximum width in a second direction Y, and the first maximum width is L2. A ratio of the first maximum length to the first maximum width satisfies a relationship of 2 ≤ L1/L2 ≤ 3, and the first direction X is perpendicular to the second direction Y

It should be noted that the first direction is a direction of a connecting line between two most distant points on the first profile. That is, the first profile as a whole can be regarded as extending along the first direction X, and a length of the connecting line between two most distant points is the first maximum length of the first profile in the first direction X. Correspondingly, the second direction Y perpendicular to the first direction X is a width direction of the first profile, and a maximum value of a width of the first profile in the second direction Y is the first maximum width.

The ratio of the first maximum length L1 to the first maximum width L2 is directly related to a shape of the first profile. For example, when the first profile is circular, the first maximum length is equal to the first maximum width. The smaller the ratio of the first maximum length L1 to the first maximum width L2, the closer the first profile is to a circle, and the closer the pole 120 is to a cylindrical shape, resulting in poor torsion resistance characteristic of the pole 120. The larger the ratio of the first maximum length L1 to the first maximum width L2, the closer the first profile is to a rectangle and the closer the pole 120 is to an elongated shape, resulting in poor tensile resistance characteristic of the pole 120. In the present disclosure, by designing the ratio of the first maximum length L1 to the first maximum width L2 to 2 ≤ L1/L2 ≤ 3, the pole 120 can have better torsion resistance characteristic while meeting the requirement of tensile resistance characteristic, thereby improving the overall mechanical properties of the top cover assembly 100.

It should be noted that since the first connecting part 121 is inserted in the first through hole 113, in order to ensure the stability of a connection between the pole 120 and the cover plate 110, a shape of the first through hole 113 fits a shape of the first connecting part 121. That is, a profile shape formed by the orthographic projection of the first through hole 113 in the direction from the second surface 112 toward the first surface 111 is consistent with a shape of the first profile, and a profile area corresponding to the first through hole 113 is slightly greater than the area formed by the first profile to ensure smooth assembly of the pole 120 and the cover plate 110.

The pole 120 may be in a regular shape such as an elliptical cylinder or a waist shape, or other irregular shapes, as long as the pole 120 has good torsion resistance characteristic and tensile resistance characteristic, there is no special restriction here.

In the embodiments of the present disclosure, the top cover assembly 100 includes the cover plate 110 and the pole 120. The cover plate 110 includes the first surface 111 and the second surface 112 opposite to each other. The cover plate 110 is provided with the first through hole 113. The first through hole 113 penetrates from the first surface 111 to the second surface 112. The pole 120 passes through the first through hole 113 and is connected to and insulated from the cover plate 110. The pole 120 includes the first connecting part 121 inserted in the first through hole 113. The orthographic projection of the first connecting part 121 in the direction from the second surface 112 toward the first surface 111 forms the first profile, and the first profile extends along the first direction X. The first profile has the first maximum length in the first direction X, and the first maximum length is L1. The first profile has the first maximum width in the second direction Y, and the first maximum width is L2. The first direction X is perpendicular to the second direction Y In the present disclosure, the ratio of the first maximum length to the first maximum width is designed to 2 ≤ L1/L2 ≤ 3, so that a reduction of the tensile resistance characteristic of the pole 120 due to an over large ratio can be avoided in the meanwhile of making the pole 120 have better torsion resistance characteristic, thereby improving the overall mechanical properties of the top cover assembly 100. In addition, by designing the ratio of the first maximum length to the first maximum width to 2 ≤ L1/L2 ≤ 3, it is also helpful to improve a welding effect between the pole 120 and the external circuit such as a pad or a busbar, thereby achieving a connection between the pole 120 and the external circuit.

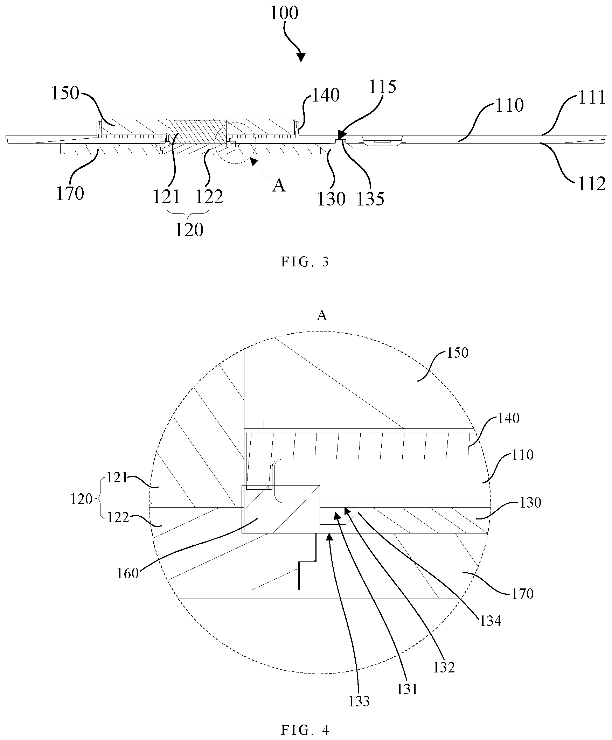

In some embodiments, as illustrated in FIG. 1 and FIG. 3, the pole 120 also includes a second connecting part 122 located outside the first through hole 113. The second connecting part 122 is electrically connected to the first connecting part 121. An orthographic projection of the second connecting part 122 in the direction from the second surface 112 toward the first surface 111 covers the orthographic projection of the first connecting part 121 in the direction from the second surface 112 toward the first surface 111. The orthographic projection of the second connecting part 122 in the direction from the second surface 112 toward the first surface 111 forms a second profile. That is, the second profile surrounds an outside of the first profile, and a cross-sectional area of the second connecting part 122 is greater than a cross-sectional area of the first connecting part 121, so that when the pole 120 and the cover plate 110 are assembled, the second connecting part 122 is located outside the first through hole 113, thus positioning an installation position of the pole 120 to a certain extent. In addition, by setting the cross-sectional area of the second connecting part 122 to be greater than the cross-sectional area of the first connecting part 121, it also helps to increase an effective connection area of the pole 120, thereby helping to design an electrical connection between the pole 120 and the battery cell 300 in then battery 10.

As illustrated in FIG. 5, the second profile extends along the first direction X. That is, an extension trend of the second profile is consistent with an extension trend of the first profile. The second profile has a second maximum length in the first direction X, and the second maximum length is L3. The second profile has a second maximum width in the second direction Y, and the second maximum width is L4. A ratio of the second maximum length to the second maximum width satisfies a relationship of 2 ≤ L3/L4 ≤ 3. That is, the second connecting part 122 and the first connecting part 121 have structures of the same shape type, so as to facilitate an integrated structural design of the first connecting part 121 and the second connecting part 122.

It should be noted that the top cover assembly 100 includes a connecting component 170. The connecting component 170 is configured to electrically connect with the second connecting part 122, and the connecting component 170 is configured to electrically connect with the battery cell 300 in the battery 10. The connecting component 170 is disposed on the second surface 112 of the cover plate 110, and the connecting component 170 is provided with a fourth through hole 171 matching the second connecting part 122. The second connecting part 122 passes through the fourth through hole 171 of the connecting component 170 and is electrically connected to the connecting component 170. By designing the radio of the second maximum length L3 to the second maximum width L4 to 2 ≤ L3/L4 ≤ 3, the second connecting part 122 is ensured to have better torsion resistance characteristic while meeting the requirement of tensile resistance characteristic, thereby improving the overall mechanical properties of the top cover assembly 100. In addition, by designing the ratio of the second maximum length L3 to the second maximum width L4 to 2 ≤ L3/L4 ≤ 3, it also helps to improve the welding effect between the pole 120 and the connecting component 170 and the welding effect between the pole 120 the battery cell 300 in the battery 10, thus realizing a connection between the pole 120 and an internal circuit.

In some embodiments, the ratio of the first maximum length to the first maximum width and the ratio of the second maximum length to the second maximum width are equal. That is, the first profile and the second profile are concentrically arranged in equal proportions. That is, the first connecting part 121 and the second connecting part 122 are arranged concentrically in equal proportions to facilitate an integrated design of the first connecting part 121 and the second connecting part 122. In addition, when electrical connection designs of the first connecting part 121 and the second connecting part 122 are carried out respectively, the same radio also helps to improve the force uniformity between the first connecting part 121 and the second connecting part 122, thereby improving the overall mechanical properties of the top cover assembly 100.

In some other embodiments, in the first direction X, distances respectively between two opposite sides of the first profile and corresponding sides of the second profile are equal. That is, in the first direction X, a width of a portion of the second connecting part 122 protruding from sides of the first connecting part 121 is equal everywhere. That is, the first connecting part 121 and the second connecting part 122 are concentrically arranged in the first direction X. The first connecting part 121 is located in a central area of the second connecting part 122, thus helping to improve an aesthetic appearance of the pole 120 and also facilitate the assembly of the pole 120 and cover plate 110.

In some embodiments, in the second direction Y, distances respectively between two opposite sides of the first profile and corresponding sides of the second profile are equal. That is, in the second direction Y, a width of a portion of the second connecting part 122 protruding from sides of the first connecting part 121 is equal everywhere. That is, in the second direction Y, the first connecting part 121 and the second connecting part 122 are concentrically arranged in the first direction X. The first connecting part 121 is located in a central area of the second connecting part 122, thus helping to improve an aesthetic appearance of the pole 120 and also facilitate the assembly of the pole 120 and cover plate 110.

In some embodiments, as illustrated in FIG. 1 to FIG. 3, the top cover component 100 includes a first insulating component 130. The first insulating component 130 is disposed on the second surface 112 of the cover plate 110. A second through hole 131 is provided on the first insulating component 130 at a position corresponding to the first through hole 113. The pole 120 passes through the second through hole 131 and the first through hole 113, and is connected to and insulated from the cover plate 110 through the first insulating component 130. That is, the first insulating component 130 is configured to separate the pole 120 from the cover plate 110 to avoid a short circuit between the pole 120 and the cover plate 110. Similarly, the second through hole 131 of the first insulating component 130 fits the pole 120, that is, a profile of the second through hole 131 is consistent with a profile of the pole 120.

As illustrated in FIG. 4, the second through hole 131 has a first opening 132 on one side of the first insulating component 130 facing the cover plate 110 and a second opening 133 on one side of the first insulating component 130 facing away from the cover plate 110. An opening area of the first opening 132 is greater than an opening area of the second opening 133. That is, the second through hole 131 is a non-uniform hole, and a sidewall of the second through hole 131 does not extend in a direction parallel to an axis of the second through hole 131. This arrangement makes the sidewall of the second through hole 131 have a longer effective length relative to an effective length of a sidewall of a vertical through hole. When a creepage phenomenon occurs on the first insulating component 130 during operation of the top cover assembly 100, a creepage distance along the sidewall of the second through hole 131 is increased, thereby helping to improve electrical properties of the top cover assembly 100.

It should be noted that the top cover assembly 100 also includes a sealing component 160. The sealing component 160 is sleeved on the pole 120 and configured to achieve sealing and insulation between the pole 120 and the cover plate 110. When assembling the top cover assembly 100, the sealing component 160 is sleeved on the pole 120, and then the pole 120 is driven to pass through the second through hole 131 and the first through hole 113 in sequence, and thus the sealing component 160 simultaneously contacts sidewalls of the pole 120, the second through hole 131, and the first through hole 113 under an action of extrusion pressure, thereby achieving sealing and insulation between the pole 120 and the cover plate 110.

In some embodiments, in a direction from the second opening 133 toward the first opening 132, at least part of the sidewall of the second through hole 131 is inclined away from the axis of the second through hole 131 to form an inclined surface 134. That is, in the direction from the second opening 133 toward the first opening 132, at least part of the sidewall of the second through hole 131 tends to expand, so as to increase the effective length of the sidewall of the second through hole 131, thereby increasing the creepage distance during operation of the top cover assembly 100 and improving the electrical properties of the top cover assembly 100. An included angle between the inclined surface 134 and the axis of the second through hole 131 is greater than or equal to 45°. That is, an expansion angle of the inclined surface 134 is greater than or equal to 45°, so that the creepage distance during operation of the top cover assembly 100 is ensured to be effectively increased.

In some other embodiments, in the direction from the second opening 133 toward the first opening 132, at least part of the sidewall of the second through hole 131 is curved in a direction away from the axis of the second through hole 131 to form a curved surface. That is, in the direction from the second opening 133 toward the first opening 132, at least part of the sidewall of the second through hole 131 is designed to be similar to a rounded corner. This design can also make at least part of the sidewall of the second through hole 131 tend to expand, so as to increase the effective length of the sidewall of the second through hole 131, thereby increasing the creepage distance during operation of the top cover assembly 100 and improving the electrical properties of the top cover assembly 100.

In some embodiments, the first insulating component 130 is provided with a limiting part 135 protruding from one side facing the cover plate 110, the cover plate 110 is provided with a limiting groove 115 on one side facing the first insulating component 130, and the limiting part 135 is configured to be inserted in the limiting groove 115 to realize the positioning and assembly of the first insulating component 130 and the cover plate 110. Moreover, a cooperation between the limiting part 135 and the limiting groove 115 also improves the torsion resistance characteristic of the first insulating component 130 and the cover plate 110, thereby improving the overall mechanical properties of the top cover assembly 100.

In some embodiments, as illustrated in FIG. 1 and FIG. 3, the top cover assembly 100 further includes a second insulating component 140 and a connecting terminal 150. The second insulating component 140 and the connecting terminal 150 are sequentially arranged in a direction away from the first surface 111. The second insulating component 140 is provided with a third through hole 141 at a position corresponding to the first through hole 113. The pole 120 passes through the first through hole 113 and the third through hole 141 and is electrically connected to the connecting terminal 150. That is, the connecting terminal 150 is configured to electrically connect with the external circuit to realize the electrical connection between the battery cell 300 located in the battery 10 and the external circuit. The second insulating component 140 is configured to separate the connecting terminal 150 from the cover plate 110 to prevent a short circuit from occurring between the connecting terminal 150 and the cover plate 110, thereby achieving an insulation connection between the pole 120 and the cover plate 110.

As illustrated in FIG. 6, a recess 142 is provided on one side of the second insulating component 140 facing the connecting terminal 150. The recess 142 is communicated with the third through hole 141. By forming the recess 142 on the second insulating component 140, when the connecting terminal 150 and the pole 120 are welded, the gas and smoke generated in the welding process can be discharged along the recess 142 in time, thereby helping to improve a welding effect between the connecting terminal 150 and the pole 120, and further improving the overall electrical properties of the top cover assembly 100.

It should be noted that a shape of the recess 142 in the embodiments of the present disclosure may be a straight shape, a cross shape, a shape of Chinese character " 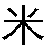 ", etc., and a specific shape of the recess 142 may be selected and adjusted according to actual design requirements, and there is no special restriction here.

One side of the connecting terminal 150 facing the second insulating component 140 may adopt the same design as the side of the connecting terminal 150 facing away from the second insulating component 140. That is, there is no distinction between front and rear sides of the connecting terminal 150, so that the connecting terminal 150 has a fool-proof function. During a production and assembly process of the top cover assembly 100, there is no need to distinguish the front and rear sides, thereby helping to improve the production and assembly efficiency of the top cover assembly 100.

In some embodiments, as illustrated in FIG. 1 and FIG. 6, an installation groove 114 is provided on the first surface 111, the second insulating component 140 is at least partially located in the installation groove 114, and a notch 143 is provided on one side of the second insulating component 140 facing the cover plate 110. A sidewall of the notch 143 at least partially abuts a sidewall of the installation groove 114. That is, a fool-proof structure is formed at a position corresponding to the notch 143 of the second insulating component 140 and the installation groove 114 on the first surface 111 of the cover plate 110 to facilitate rapid assembly of the second insulating component 140 and the cover plate 110, thereby improving the overall assembly efficiency of the top cover assembly 100.

The notch 143 on the second insulating component 140 may be provided at one of corners of the second insulating component 140 or two corners in a diagonal direction, and the installation groove 114 on the first surface 111 of the cover plate 110 is correspondingly chamfered. A profile shape of the notch 143 may be a triangle or other regular or irregular shape, and a corresponding position of the installation groove 114 is designed to be adapted, and there is no special limitation here.

Secondly, embodiments of the present disclosure provide a battery. The battery includes the top cover assembly. A specific structure of the top cover assembly refers to the above-mentioned embodiments. Since the battery adopts all the technical solutions of all the above-mentioned embodiments, the battery at least has all the beneficial effects brought by the technical solutions of the above embodiments, and the beneficial effects will not be repeated here.

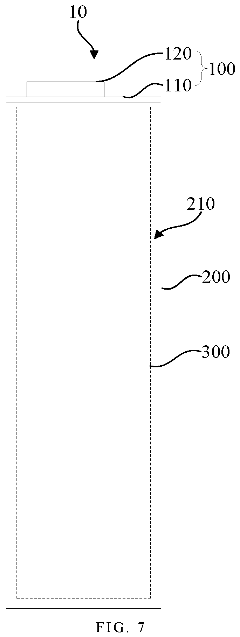

As illustrated in FIG. 7, the battery 10 includes a casing 200, the top cover assembly 100, and a battery cell 300. The casing 200 is provided with an accommodation cavity 210. The cover plate 110 of the top cover assembly 100 is connected to the casing 200, and the battery cell 300 is located in the accommodation cavity 210. The battery cell 300 is electrically connected to the pole 120 in the top cover assembly 100, so as to facilitate the electrical connection between the battery cell 300 and the external circuit.

The battery cell 300 includes a first electrode and a second electrode. Two poles 120 may be disposed on the cover plate 110 of the top cover assembly 100 at the same time. The first electrode and the second electrode of the battery cell 300 are electrically connected to the two poles 120, respectively. Alternatively, both ends of the casing 200 are respectively connected to one top cover assembly 100. Each top cover assembly 100 includes one pole 120, and the first electrode and the second electrode of the battery cell 300 are electrically connected to the poles 120 in the two top cover assemblies 100, respectively. A specific connection method between the battery cell 300 and the top cover assembly 100 may be selected and adjusted according to actual design requirements, and is not particularly limited here.

Specifically, as illustrated in FIG. 1, FIG. 2, and FIG. 5, the top cover assembly 100 in the embodiments of the present disclosure includes the cover plate 110 and the pole 120. The cover plate 110 includes the first surface 111 and the second surface 112 opposite to each other. The cover plate 110 is provided with the first through hole 113. The first through hole 113 penetrates from the first surface 111 to the second surface 112. The pole 120 passes through the first through hole 113 and is connected to and insulated from the cover plate 110. The pole 120 includes the first connecting part 121 inserted in the first through hole 113. The orthographic projection of the first connecting part 121 in the direction from the second surface 112 toward the first surface 111 forms the first profile, and the first profile extends along the first direction X. The first profile has the first maximum length in the first direction X, and the first maximum length is L1. The first profile has the first maximum width in the second direction Y, and the first maximum width is L2. The first direction X is perpendicular to the second direction Y In the present disclosure, the ratio of the first maximum length to the first maximum width is designed to 2 ≤ L1/L2 ≤ 3, so that a reduction of the tensile resistance characteristic of the pole 120 due to an over large ratio can be avoided in the meanwhile of making the pole 120 have better torsion resistance characteristic, thereby improving the overall mechanical properties of the top cover assembly 100.

The embodiments of the present disclosure are introduced in detail above. Specific examples are used in this paper to illustrate the principles and implementation methods of the present disclosure. The description of the above embodiments is only used to help understand the methods and the core ideas of the present disclosure. At the same time, for those skilled in the art, there will be changes in the specific implementation mode and application scope based on the ideas of the present disclosure. In summary, the content of this description should not be understood as a limitation of the present disclosure.

## Claims

1. A top cover assembly (100), **characterized by** comprising:
a cover plate (110) comprising a first surface (111) and a second surface (112) opposite to each other, wherein a first through hole (113) is opened on the cover plate (110), and the first through hole (113) penetrates from the first surface (111) to the second surface (112); and
a pole (120) passing through the first through hole (113) and connected to and insulated from the cover plate (110), wherein the pole (120) comprises a first connecting part (121) inserted through the first through hole (113), an orthographic projection of the first connecting part (121) in a direction from the second surface (112) to the first surface (111) forms a first profile, the first profile extends along a first direction (X), the first profile has a first maximum length in the first direction (X), the first maximum length is L1, the first profile has a first maximum width in a second direction (Y), the first maximum width is L2, a ratio of the first maximum length to the first maximum width satisfies a relationship of 2 ≤ L1/L2 ≤ 3, and the first direction (X) is perpendicular to the second direction (Y).

2. The top cover assembly (100) according to claim 1, **characterized in that** the pole (120) further comprises a second connecting part (122) located outside the first through hole (113), the second connecting part (122) is electrically connected to the first connecting part (121), an orthographic projection of the second connecting part (122) in the direction from the second surface (112) to the first surface (111) covers the orthographic projection of the first connecting part (121) in the direction from the second surface (112) to the first surface (111), and the orthographic projection of the second connecting part (122) in the direction from the second surface (112) to the first surface (111) forms a second profile.

3. The top cover assembly (100) according to claim 2, **characterized in that** the second profile extends along the first direction (X), the second profile has a second maximum length in the first direction (X), the second maximum length is L3, the second profile has a second maximum width in the second direction (Y), the second maximum width is L4, and a ratio of the second maximum length to the second maximum width satisfies a relationship of 2 ≤ L3/L4 ≤ 3.

4. The top cover assembly (100) according to claim 3, **characterized in that** the ratio of the first maximum length to the first maximum width and the ratio of the second maximum length to the second maximum width are equal.

5. The top cover assembly (100) according to claim 2, **characterized in that** in the first direction (X), distances respectively between two opposite sides of the first profile and corresponding sides of the second profile are equal; and/or
in the second direction (Y), distances respectively between two opposite sides of the first profile and corresponding sides of the second profile are equal.

6. The top cover assembly (100) according to any one of claim 1 to claim 5, **characterized in that** the top cover assembly (100) comprises a first insulating component (130), the first insulating component (130) is disposed on the second surface (112) of the cover plate (110), a second through hole (131) is provided on the first insulating component (130) at a position corresponding to the first through hole (113), and the pole (120) passes through the second through hole (131) and the first through hole (113), and is connected to and insulated from the cover plate (110) through the first insulating component (130); the second through hole (131) has a first opening (132) on one side of the first insulating component (130) facing the cover plate (110), the second through hole (131) has a second opening (133) on one side of the first insulating component (130) facing away from the cover plate (110), and an opening area of the first opening (132) is greater than an opening area of the second opening (133).

7. The top cover assembly (100) according to claim 6, **characterized in that** in a direction from the second opening (133) toward the first opening (132), at least part of a sidewall of the second through hole (131) is inclined away from an axis of the second through hole (131) to form an inclined surface, and an included angle between the inclined surface and the axis of the second through hole (131) is greater than or equal to 45°; or
in the direction from the second opening (133) toward the first opening (132), at least part of the sidewall of the second through hole (131) is curved in a direction away from the axis of the second through hole (131) to form a curved surface.

8. The top cover assembly (100) according to claim 6, **characterized in that** the first insulating component (130) is provided with a limiting part (135) protruding from one side facing the cover plate (110), the cover plate (110) is provided with a limiting groove (115) on one side facing the first insulating component (130), and the limiting part (135) is configured to be inserted in the limiting groove (115).

9. The top cover assembly (100) according to any one of claim 1 to claim 5, **characterized in that** the top cover assembly (100) further comprises a second insulating component (140) and a connecting terminal (150), and the second insulating component (140) and the connecting terminal (150) are sequentially arranged in a direction away from the first surface (111); the second insulating component (140) is provided with a third through hole (141) at a position corresponding to the first through hole (113), and the pole (120) passes through the first through hole (113) and the third through hole (141) and is electrically connected to the connecting terminal (150); and a recess (142) is provided on one side of the second insulating component (140) facing the connecting terminal (150), and the recess (142) is communicated with the third through hole (141).

10. The top cover assembly (100) according to claim 9, **characterized in that** a shape of the recess (142) is a straight shape, a cross shape, or a shape of Chinese character "*".

11. The top cover assembly (100) according to claim 9, **characterized in that** one side of the connecting terminal (150) facing the second insulating component (140) has a same design as one side of the connecting terminal (150) facing away from the second insulating component (140).

12. The top cover assembly (100) according to claim 9, **characterized in that** an installation groove (114) is provided on the first surface (111), the second insulating component (140) is at least partially located in the installation groove (114), a notch (143) is provided on one side of the second insulating component (140) facing the cover plate (110), and a sidewall of the notch (143) at least partially abuts a sidewall of the installation groove (114).

13. The top cover assembly (100) according to claim 12, **characterized in that** the notch (143) on the second insulating component (140) is provided at a corner of the second insulating component (140).

14. The top cover assembly (100) according to claim 2, **characterized in that** the top cover assembly (100) comprises a connecting component (170), the connecting component (170) is disposed on the second surface (112) of the cover plate (110), the connecting component (170) is provided with a fourth through hole (171) matching the second connecting part (122), and the second connecting part (122) passes through the fourth through hole (171) of the connecting component (170) and is electrically connected to the connecting component (170).

15. A battery (10), **characterized in that** the battery (10) comprises:
a casing (200) provided with an accommodation cavity (210);
the top cover assembly (100) of any one of claim 1 to claim 14, wherein the cover plate (110) of the top cover assembly (100) is connected to the casing (200); and
a battery cell (300) located in the accommodation cavity (210), wherein the battery cell (300) is electrically connected to the pole (120) of the top cover assembly (100).
